# EUROPÄISCHE PATENTSCHRIFT

(11) **EP 0 557 763 B1**
(45) Veröffentlichungstag und Bekanntmachung des Hinweises auf die Patenterteilung: **28.12.1994**
(21) Anmeldenummer: 93101810.5
(22) Anmeldetag: 05.02.1993
(51) Int. Cl.: E01C 23/08, B62D 5/10

(54) **Strassenfräse**
Road milling machine
Machine de fraisage

(30) Priorität: 26.02.1992 DE 4205878
(43) Veröffentlichungstag der Anmeldung: 01.09.1993
(73) Patentinhaber: ABG-WERKE GmbH, D-31785 Hameln (DE)
(72) Erfinder: Hellwig, Helmut, W-4970 Bad Oeynhausen (DE)
(74) Vertreter: Sparing Röhl Henseler Patentanwälte

(56) Entgegenhaltungen:
- DE-C- 4 028 738
- DE-U- 9 206 344
- US-A- 3 895 843

## Beschreibung

Die Erfindung betrifft eine Straßenfräse zum Fräsen von Strassenbelägen mit einem Paar von jeweils mit einem eigenen hydraulischen Antrieb versehenen Lenkrädern, die über Achsschenkel drehbar gegenüber dem Fahrgestell angeordnet sind, wobei die Achsschenkel miteinander verbunden sind und der Lenkeinschlag über einen am Fahrgestell und an einem Achsschenkel angelenkten Zylinder vornehmbar ist.

Bei bekannten Straßenfräsen zum Fräsen von Straßenbelägen zwecks Erneuerung o.dgl. ist ein Paar von jeweils mit einem eigenen hydraulischen Antrieb, etwa einem Radnabengetriebe, versehenen, vorderen Lenkrädern vorhanden, die über Achsschenkel drehbar an einer Wippe angeordnet sind, wobei die Achsschenkel über eine Spurstange miteinander verbunden sind und der Lenkeinschlag über einen an der Wippe und an einem Achsschenkel angelenkten Zylinder vornehmbar ist. Hierdurch wird praktisch eine Parallelogrammanlenkung über eine Viergelenkkette mit relativ geringem maximalem Lenkeinschlag bewirkt, so daß in bestimmten Anwendungsfällen kein genügender Lenkeinschlag und damit keine genügende Manövrierfähigkeit der Straßenfräse erreicht werden kann. So bereitet es beispielsweise Schwierigkeiten, rechtsbündig um einen Kanaldeckel o.dgl. herum zu fräsen.

Zur Verbesserung des Lenkeinschlags ist aus der US-A-3 895 843 eine Straßenfräse bekannt, welche einen Lenkhebel aufweist, der um eine zum Fahrgestell vertikale Achse nach beiden Seiten der Straßenfräsenlängsachse in Richtung zu den Achsschenkeln schwenkbar angelenkt ist. Der gezeigte Lenkhebel weist jedoch zwei freie Enden auf, woran jeweils nicht gekröpfte Schubstangen angelenkt sind. Außerdem ist der gezeigte Lenkzylinder nicht am Achsschenkel, sondern an dem zweiarmigen Lenkhebel angelenkt.

Aufgabe der Erfindung ist es, eine Straßenfräse der eingangs genannten Art zu schaffen, die einen wesentlich größeren Lenkeinschlag und damit eine entsprechend größere Manövierfähigkeit ermöglicht, so daß insbesondere um Kanaldeckel o.dgl. herum zumindest in einer Richtung bündig gefräst werden kann.

Diese Aufgabe wird dadurch gelöst, daß in Straßenfräsenquerrichtung etwa mittig am Fahrgestell ein Hebel um eine zum Fahrgestell vertikale Achse nach beiden Seiten der Straßenfräsenlängsachse in Richtung zu den Achsschenkeln schwenkbar angelenkt ist, an dessen freim Ende zwei Schubstangen angelenkt sind, die mit ihrem anderen Ende an jeweils einem der Achsschenkel angelenkt sind, wobei wenigstens eine Schubstange in Richtung zum Hebel gekröpft ist.

Weitere Ausgestaltungen der Erfindung sind der nachfolgenden Beschreibung und den abhängigen Ansprüchen zu entnehmen.

Die Erfindung wird nachstehend anhand eines in den beigefügten Abbildungen dargestellten Ausführungsbeispiels näher erläutert.

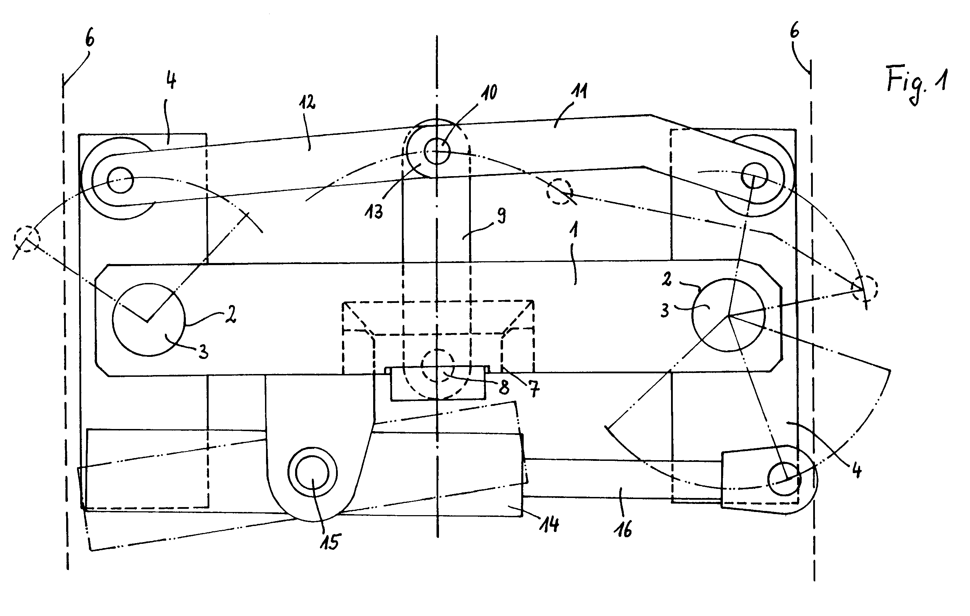

Fig. 1 zeigt in Draufsicht eine Vorderachsenanordnung einer Straßenfräse.

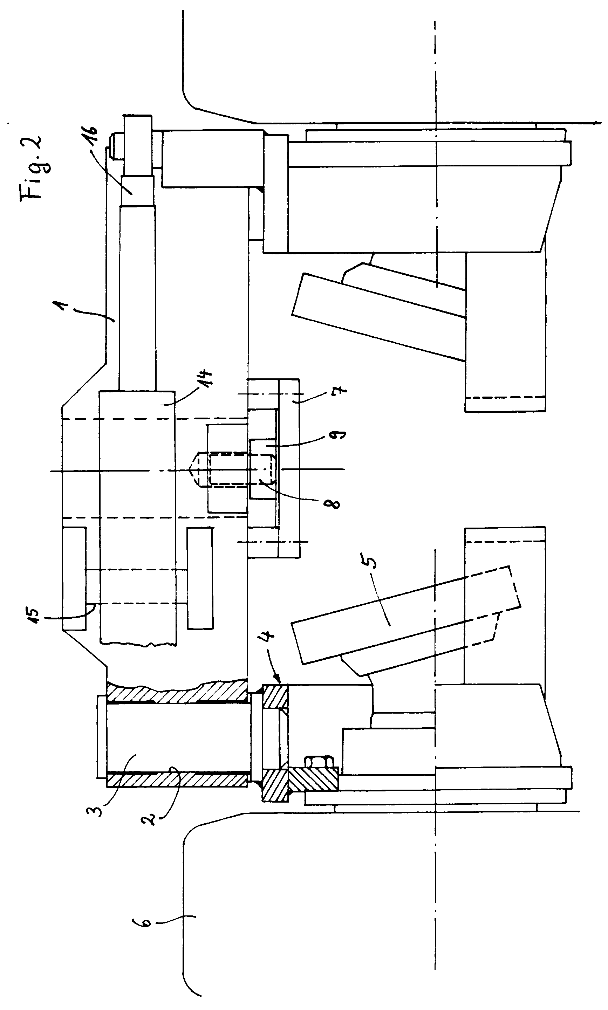

Fig. 2 zeigt die Vorderachsenanordnung von Fig. 1 in Seitenansicht.

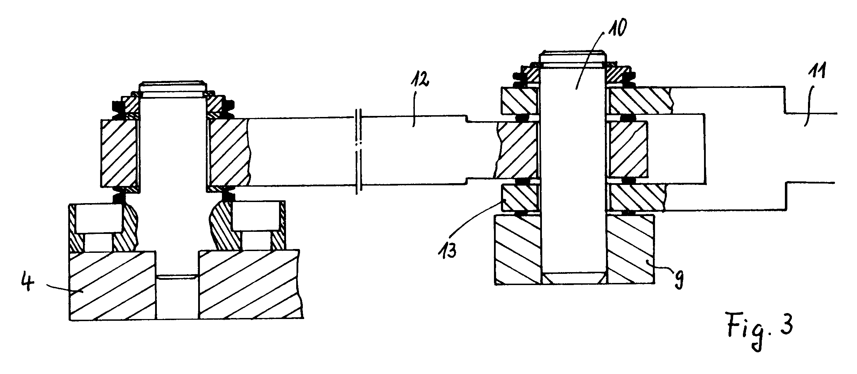

Fig. 3 zeigt ausschnittweise die Spurstangenanordnung bei der Vorderachsenanordnung der Fig. 1 und 2.

Die Straßenfräse umfaßt eine Wippe 1, die als Teil des Fahrgestells der Straßenfräse quer zur Längsachse und damit quer zur Geradeausfahrtrichtung der Straßenfräse angeordnet ist. Die Wippe 1 ist an beiden Seiten jeweils mit einer vertikalen Bohrung 2 zur Aufnahme von Achsschenkelbolzen 3 von Achsschenkeln 4 versehen. Die Achsschenkel 4 sind jeweils mit einem vorderen, von einem hydraulischen Radnabengetriebe 5 antreibbaren Lenkrad 6 verbunden.

Die als Achsschenkelhalterung dienende Wippe 1 trägt mittig und unterseitig angeordnet eine Halterung 7 für einen in dieser und in der Wippe 1 gehaltenen, vertikalen Schwenkzapfen 8 für einen horizontalen Hebel 9. Die Halterung 7 dient gleichzeitig als beidseitiger Anschlag für den Hebel 9, so daß dieser gegenüber seiner Ausgangsstellung in Richtung der Längsachse der Straßenfräse nur um einen vorbestimmten Winkel von beispielsweise 30° nach beiden Seiten schwenkbar ist.

Der Hebel 9 ist an seinem freien Ende mit einem Zapfen 10 versehen, um den zwei Schubstangen 11, 12 horizontal drehbar angeordnet sind, zu welchem Zweck im dargestellten Ausführungsbeispiel die rechte Schubstange 11 ein gabelförmiges Ende 13 aufweist, in der das zugehörige Ende der linken Schubstange 12 angeordnet wird, so daß beide Schubstangen 11, 12 in einer Ebene verlaufen. Die beiden Schubstangen 11, 12 sind jeweils an einem Achsschenkel 4 angelenkt und im dargestellten Ausführungsbeispiel ist die rechte Schubstange 11 zur Wippe 1 hin um einen Winkel von beispielsweise etwa 20° abgekröpft.

Auf der den Schubstangen 11, 12 abgewandten Seite ist ein Schwenkzapfenzylinder 14 über einen vertikalen Schwenkzapfen 15, der etwa mittig zum Zylinderkörper angeordnet ist, an der Wippe 1 angelenkt und über seine Kolbenstange 16 gelenkig mit einem, hier dem rechten Achsschenkel 4 verbunden. Der Schwenkzapfenzylinder 14 wird entsprechend dem gewünschten Lenkeinschlag mit Hydraulikflüssigkeit in der einen bzw. anderen Richtung beaufschlagt und beötigt weniger Bautiefe als ein einseitig angelenkter Zylinder für den gleichen Lenkeinschlag.

Bei dem dargestellten Ausführungsbeispiel wird durch die Anordnung des schwenkbaren Hebels 9 und der daran angelenkten Schubstangen 11, 12 ein sehr großer Lenkeinschlag ermöglicht, der zusätzlich durch die Abkröpfung der rechten Schubstange 11 unterstützt wird, so daß es insbesondere bei dieser Ausführungsform möglich ist, rechtsbündig um einen Kanaldeckel herum in einem ununterbrochenen Arbeitsgang zu fräsen.

## Patentansprüche

1. Straßenfräse zum Fräsen von Straßenbelägen, mit einem Paar von jeweils mit einem eigenen hydraulischen Antrieb versehenen Lenkrädern (6), die über Achsschenkel (4) drehbar gegenüber dem Fahrgestell angeordnet sind, wobei die Achsschenkel (4) miteinander verbunden sind und der Lenkeinschlag über einen am Fahrgestell und an einem Achsschenkel (4) angelenkten Zylinder (14) vornehmbar ist, wobei in Straßenfräsenquerrichtung etwa mittig am Fahrgestell ein Hebel (9) um eine zum Fahrgestell vertikale Achse nach beiden Seiten der Straßenfräsenlängsachse, in Richtung zu den Achsschenkeln (4) schwenkbar angelenkt ist, an dessen freim Ende zwei Schubstangen (11, 12) angelenkt sind, die mit ihrem anderen Ende an jeweils einem der Achsschenkel (4) angelenkt sind, wobei wenigstens eine Schubstange (11) in Richtung zum Hebel (9) gekröpft ist.

2. Straßenfräse nach Anspruch 1, dadurch gekennzeichnet, daß der Hebel (9) um einen vorbestimmten Winkel nach beiden Seiten der Längsachse der Strassenfräse schwenkbar angeordnet ist.

3. Straßenfräse nach Anspruch 1 oder 2, dadurch gekennzeichnet, daß der Hebel (9) gegenüber einer Wiege (1) vorstehend angeordnet ist.

4. Straßenfräse nach einem der Ansprüche 1 bis 3, dadurch gekennzeichnet, daß der Zylinder (14) ein etwa mittig gelagerter Schwenkzapfenzylinder ist.

## Claims

1. A road milling machine for milling road surfacings, having a pair of steered wheels (6), each of which is provided with its own hydraulic drive means and is arranged to rotate relative to the chassis by way of steering axle stubs (4), the steering axle stubs (4) being joined to one another and the steering lock being performed by way of a cylinder (14) pivotally mounted on the chassis and on a steered wheel stub (4), wherein, in the direction transverse to the road milling machine, approximately centrally on the chassis, a lever (9) is mounted so as to pivot towards each side of the longitudinal axis of the road milling machine, about an axis that is vertical with respect to the chassis, in the direction towards the steering axle stubs (4), on the free end of which lever there are pivotally mounted two pusher rods (11, 12) which are pivotally mounted at their other end on a respective one of the steering axle stubs (4), at least one pusher rod (11) being cranked in the direction towards the lever (9).

2. A road milling machine according to claim 1, characterized in that the lever (9) is arranged so as to pivot through a predetermined angle towards each side of the longitudinal axis of the road milling machine.

3. A road milling machine according to claim 1 or 2, characterized in that the lever (9) is arranged to project with respect to a rocker (1).

4. A road milling machine according to one of claims 1 to 3, characterized in that the cylinder (14) is an approximately centrally mounted pivot pin cylinder.

## Revendications

1. Fraise routière destinée au fraisage de revêtements routiers, comprenant une paire de roues directrices (6) chacune munie d'un entraînement hydraulique propre, les roues directrices étant montées sur un porte-fusée d'essieu (4), pivotantes par rapport au châssis, les porte-fusées d'essieu (4) étant reliés ensemble et le braquage étant effectué au moyen d'un vérin (14) articulé sur le châssis et sur un porte-fusée d'essieu (4), dans laquelle, en position centrale transversalement au châssis de la fraise, un levier (9) est articulé autour d'un axe vertical au châssis, pivotant en direction des porte-fusées d'essieu (4) des deux côtés de l'axe longitudinal de fraisage, deux biellettes (11, 12) étant articulées à l'extrémité libre du levier (9), chacune de ces biellettes étant respectivement articulée à son autre extrémité sur un porte-fusée d'essieu (4), au moins l'une des biellettes (11) étant coudée en direction du levier (9).

2. Fraise routière selon la revendication 1, caractérisée en ce que le levier (9) est monté pivotant d'un angle prédéterminé de chaque côté de l'axe longitudinal de la fraise.

3. Fraise routière selon la revendication 1 ou 2, caractérisée en ce que le levier (9) est agencé en saillie par rapport à un berceau (1).

4. Fraise routière selon les revendications 1 à 3, caractérisée en ce que le vérin (14) est un vérin monté pivotant autour d'un pivot disposé sensiblement de manière centrale.
